# EUROPÄISCHE PATENTANMELDUNG

(11) **EP 4 722 548 A1**
(43) Veröffentlichungstag der Anmeldung: **08.04.2026**
(21) Anmeldenummer: 25202917.8
(22) Anmeldetag: 18.09.2025
(51) Int. Cl.: F16B 37/08

(54) **VORRICHTUNG ZUM FESTLEGEN EINER BEFESTIGUNGSEINRICHTUNG AN EINEM GEWINDESCHAFTENDE EINER GEWINDESCHRAUBE ODER DERGLEICHEN**

(30) Priorität: 02.10.2024 DE 102024128585
(71) Anmelder: LISI AUTOMOTIVE Mecano GmbH, 69123 Heidelberg (DE)
(72) Erfinder: Guttmann, Toni, 69181 Leimen / St. Ilgen (DE)
(74) Vertreter: Habermann Intellectual Property Partnerschaft von Patentanwälten mbB

(57) **Zusammenfassung**

Eine Vorrichtung (1) zum Festlegen einer
Befestigungseinrichtung (21) an einem Gewindeschaftende (2) einer Gewindeschraube (3) oder dergleichen weist einen Klemmbereich (4) mit zwei beabstandet zueinander angeordneten Klemmschenkeln (5, 6) auf, mit welchen eine Gewindemantelfläche (7) des Gewindeschaftendes (2) klemmend umgreifbar ist, und einen Kopfbereich (16) mit der Befestigungseinrichtung (21) auf, die bei einer bestimmungsgemäßen Festlegung der Vorrichtung (1) an dem Gewindeschaftende (2) an einer Stirnseite (15) des Gewindeschaftendes (2) angeordnet ist. In dem Klemmbereich (4) ist mindestens ein Eingriffselement (12) angeordnet, welches in einen Gewindegang (14) an dem Gewindeschaftende (2) eingreift und dadurch die Vorrichtung (1) in einer axialen Richtung an dem Gewindeschaftende (2) fixiert. Die Vorrichtung (1) weist in dem Kopfbereich (16) eine Stirnseitenplatte (17) mit der daran ausgebildeten Befestigungseinrichtung (21) auf. Die Vorrichtung (1) ist aus einem ausgehend von einem ebenflächigen einstückigen Blechzuschnitt (23) herstellbar.

## Beschreibung

Die Erfindung betrifft eine Vorrichtung zum Festlegen einer Befestigungseinrichtung an einem Gewindeschaftende, insbesondere zur sicheren und stabilen Befestigung von Kabeln, von Kabelbindern oder von ähnlichen Befestigungseinrichtungen zur Befestigung von weiteren Komponenten an den frei abstehenden Endbereichen eines Gewindeschafts von Schrauben, Bolzen oder Gewindestäben.

Aus dem Stand der Technik sind Vorrichtungen zur Befestigung von Kabeln oder von Kabelbindern an Gewindeschaftenden bekannt, die in der Regel aus Kunststoff gefertigt sind. Diese bekannten Vorrichtungen weisen typischerweise eine über das Gewindeschaftende aufschiebbaren Kappe auf, welche das Ende der Schraube oder des Bolzens umschließt. Die Kappe weist eine zylindrische Innenbohrung auf, die in der Regel glatt oder leicht geriffelt ist, um ein Festhalten an dem Außengewinde des Gewindeschaftendes zu ermöglichen.

Eine solche Kappe ist darauf ausgelegt, an einer Außenseite der Kappe ein Kabel oder einen Kabelbinder aufzunehmen und in einer definierten Position zu fixieren. Hierzu verfügt die Kappe häufig über seitliche Durchführungen oder Haltevorrichtungen, durch die beispielsweise ein Kabelbinder geführt werden kann, um Kabelbündel an dem Gewindeende sicher zu befestigen.

Ein wesentlicher Nachteil der bekannten Vorrichtungen besteht darin, dass die Verbindung zwischen der Kappe und dem Gewindeschaftende oft nicht ausreichend stabil ist, insbesondere wenn die Vorrichtung hohen Zug- oder Drehkräften ausgesetzt wird. Dies kann dazu führen, dass die Kappe ungewollt vom Gewindeschaftende abrutscht, was die Fixierung des Kabelbinders beeinträchtigen kann. Zudem besteht bei Vibrationen oder mechanischen Belastungen die Gefahr, dass die Kunststoffkappe beschädigt wird oder sich allmählich von dem Gewindeschaftende ablöst.

Die Montage und Demontage einer solchen Kappe erfordert oft zusätzliche Werkzeuge oder erheblichen Kraftaufwand, was die Handhabung im praktischen Einsatz erschwert.

Insgesamt sind die bekannten Vorrichtungen zwar einfach in der Herstellung, bieten jedoch keine zuverlässige und dauerhafte Befestigungslösung für Kabel oder Kabelbinder an Gewindeschaftenden, insbesondere bei Anwendungen, die hohe mechanische Stabilität und Flexibilität erfordern.

Es wird als eine Aufgabe der vorliegenden Erfindung angesehen, diese Nachteile zu überwinden, indem eine Vorrichtung bereitstellt wird, die eine sichere und stabile Befestigung ermöglicht und gleichzeitig einfach herstellbar und zu montieren ist.

Diese Aufgabe wird erfindungsgemäß dadurch gelöst, dass die Vorrichtung einen Klemmbereich mit zwei beabstandet zueinander angeordneten Klemmschenkeln aufweist, mit welchen eine Gewindemantelfläche des Gewindeschaftendes klemmend umgreifbar ist, und dass die Vorrichtung einen Kopfbereich mit einer Befestigungseinrichtung aufweist, die bei einer bestimmungsgemäßen Festlegung der Vorrichtung an dem Gewindeschaftende an einer Stirnseite des Gewindeschaftendes angeordnet ist. Die Vorrichtung umfasst zwei beabstandete Klemmschenkel, welche die Gewindemantelfläche des Schraubengewindes sicher umgreifen und eine feste Positionierung der Vorrichtung am Gewindeende bewirken können. Die beiden Klemmschenkel können sich in einer axialen Richtung über einen ausreichend weiten Abschnitt des Gewindeschaftendes erstrecken, sodass ein unerwünschtes Verkippen der Klemmschenkel und damit der Vorrichtung durch Kräfte und Momente verhindert werden kann, die während einer bestimmungsgemäßen Verwendung der Vorrichtung auf die Vorrichtung ausgeübt werden.

In vorteilhafter Weise kann vorgesehen sei, dass einer der beiden Klemmschenkel oder beide Klemmschenkel einen Klemmschenkelanlagebereich aufweist, bzw. aufweisen, wobei der Klemmschenkelanlagebereich eine wannenförmig geformte bzw. eine in einer Querschnittsebene senkrecht zu der axialen Richtung gekrümmt verlaufende oder als Kreisbogen ausgebildete Klemmschenkelanlagefläche aufweist, die sich bei einer bestimmungsgemäßen Festlegung der Vorrichtung an dem Gewindeschaftende zumindest abschnittsweise flächig an die Gewindemantelfläche anlegt. Auf diese Weise kann ein großflächiger Anlage- und Klemmkontakt zwischen den beiden Klemmschenkeln und der Gewindemantelfläche des Gewindeschaftendes bewirkt werden, der ein zuverlässige und mechanisch beanspruchbare Festlegung der Vorrichtung an dem Gewindeschaftende unterstützt und einem unerwünschten Verkippen entgegenwirkt.

Der Kopfbereich, in welchem die Befestigungseinrichtung angeordnet ist, ermöglicht zweckmäßigerweise die sichere Befestigung eines Kabels oder eines Kabelbinders oder einer anderen Komponente mit einer länglichen Formgebung sowie gegebenenfalls von Komponenten, die ihrerseits ein hakenförmiges oder ösenförmiges Verbindungselement aufweisen. Es kann auch vorgesehen sein, dass die Befestigungseinrichtung eine von dem Gewindeschaftende abstehend angeordnete Befestigungszunge oder Befestigungslasche aufweist, an welcher ein Kabel oder ein Kabelbinder festlegbar ist. Diese Konstruktion bietet eine hohe Stabilität und verhindert ein Abrutschen der Vorrichtung bei mechanischer Belastung.

Die beiden Klemmschenkel können bei einer bestimmungsgemäßen Verwendung der Vorrichtung und einer entsprechenden Anordnung der Klemmschenkel an dem Gewindeschaftende in einem sich in der axialen Richtung ausreichend weit erstreckenden Längsabschnitt mit einem hohen Anpressdruck an die Gewindemantelfläche des Gewindeschaftendes angedrückt werden. Dabei können die beiden Klemmschenkel in einem jeweiligen Klemmschenkelanlagebereich auch das Gewindeschaftende etwas umgreifen. Auf diese Weise kann eine kraftschlüssige und reibschlüssige Festlegung der Klemmschenkel der Vorrichtung an dem Gewindeschaftende bewirkt werden.

Gemäß einer vorteilhaften Ausgestaltung des Erfindungsgedankens ist vorgesehen, dass in dem Klemmbereich mindestens ein Eingriffselement angeordnet oder ausgebildet ist, welches bei einer bestimmungsgemäßen Festlegung der Vorrichtung an dem Gewindeschaftende in einen Gewindegang an dem Gewindeschaftende eingreift und dadurch die Vorrichtung in einer axialen Richtung an dem Gewindeschaftende fixiert. Durch das Eingriffselement, das in den Gewindegang des Gewindeschaftendes eingreift, wird die Vorrichtung zusätzlich mit einem formschlüssigen Eingriff zwischen dem Eingriffselement in einen Gewindegang an dem Gewindeschaftende festgelegt und in der axialen Richtung gesichert. Dies erschwert oder verhindert ein unerwünschtes Verschieben oder Lösen der Vorrichtung in der axialen Richtung bzw. entlang der Achse des Gewindes in dem Gewindeschaftende, was besonders bei dynamischen Belastungen von Vorteil ist.

Gemäß einer als besonders vorteilhaft angesehenen Ausgestaltung des Erfindungsgedankens ist optional vorgesehen, dass das Eingriffselement eine Rasteingriffszunge ist, die an einem Klemmschenkel abstehend angeordnet ist und mit einem freien Ende rastend in den Gewindegang eingreifen kann. Eine in geeigneter Weise ausgestaltete und angeordnete Rasteingriffszunge ermöglicht eine einfache und schnelle Montage, da die Rasteingriffszunge bei einem Aufschieben der Klemmschenkel auf die Gewindemantelfläche des Gewindeschaftendes selbststätig in einen Gewindegang einrastet und darin fixiert wird. Die Rasteingriffszunge kann so angeordnet und ausgerichtet sein, dass die beiden Klemmschenkel bei einer vorgegebenen axialen Position in radialer Richtung quer zu dem sich in der axialen Richtung erstreckenden Gewindeschaftende auf das Gewindeschaftende aufgeschoben werden können, bis die Vorrichtung einschnappend an dem Gewindeschaftende festgeklipst ist, und die Rasteingriffszunge bei der bestimmungsgemäßen Anordnung der Klemmschenkel in den Gewindegang hineinragt und darin eingreifend festgelegt ist. Es kann auch vorgesehen sein, dass die Rasteingriffszunge ein in Richtung des Kopfbereichs frei abstehendes Eingriffsende aufweist, welches insbesondere im Bereich des Eingriffsendes in Richtung des Gewindeschaftendes verformt ist. Die Vorrichtung mit einer derart ausgebildeten Rasteingriffszunge kann in der axialen Richtung von der Stirnseite her auf das Gewindeschaftende aufgeschoben oder aufgesteckt und bis in die für die Klemmschenkel vorgesehene axiale Festlegungsposition verlagert werden, wobei die Rasteingriffszunge während der Verlagerung elastisch nach außen verformt wird und an der Gewindemantelfläche entlanggleitet, um in der vorgesehenen Festlegungsposition in den unmittelbar an das Eingriffsende angrenzenden Gewindegang einzurasten und derart darin formschlüssig einzugreifen, dass ein unbeabsichtigtes Abziehen der Klemmschenkel in der axialen Richtung in Richtung der Stirnseite nicht mehr möglich ist oder nur durch eine Beschädigung oder Zerstörung der Rasteingriffszunge bewirkt werden kann. Dies erleichtert die Handhabung und sorgt für eine zuverlässige Festlegung und Fixierung der Vorrichtung ohne zusätzliches Werkzeug.

Weiterhin kann optional vorgesehen sein, dass in jedem Klemmschenkel mindestens ein Eingriffselement beabstandet von einem Klemmschenkelrand in einem Klemmschenkelanlagebereich angeordnet oder ausgebildet ist, in welchem der Klemmschenkel bei einer bestimmungsgemäßen Festlegung der Vorrichtung klemmend an dem Gewindeschaftende anliegt. Durch die Anordnung von mindestens zwei Eingriffselementen in den beiden Klemmschenkeln wird eine gleichmäßigere Verteilung der formschlüssigen Eingriffe zwischen der Vorrichtung und dem Gewindeschaftende ermöglicht. Dies führt zu einer verbesserten Stabilität der Vorrichtung und reduziert die Gefahr von Beschädigungen an dem Gewinde des Gewindeschaftendes sowie von Beschädigungen bei der Vorrichtung, insbesondere bei den Klemmschenkeln und den Eingriffselementen.

Zusätzlich oder alternativ dazu kann optional auch vorgesehen sein, dass die beiden Klemmschenkel über einen Schenkelverbindungsabschnitt miteinander verbunden sind, und dass in dem Schenkelverbindungsabschnitt ein Eingriffselement angeordnet oder ausgebildet ist. Der Schenkelverbindungsabschnitt ermöglicht eine verbesserte Stabilität bei dem Andrücken und bei der Festlegung der Klemmschenkel an der Gewindemantelfläche und verhindert ein Auseinanderdriften der Klemmschenkel. Der Schenkelverbindungsabschnitt kann im Wesentlichen ebenflächig mit einer rechteckigen Grundfläche ausgebildet sein. Das in diesem Bereich angeordnete Eingriffselement ermöglicht eine besonders zuverlässige Festlegung und axiale Fixierung der Vorrichtung, was eine mechanisch besonders belastbare Festlegung der Vorrichtung mit dem Gewindeschaftende begünstigt.

Gemäß einer Ausgestaltung des Erfindungsgedankens ist vorgesehen, dass die Vorrichtung in dem Kopfbereich eine Stirnseitenplatte aufweist, die auf einer Schenkelverbindungsseite mit den beiden Klemmschenkeln verbunden ist und bei einer bestimmungsgemäßen Festlegung der Vorrichtung an dem Gewindeschaftende quer zu einer axialen Richtung des Gewindeschaftendes an dem Gewindeschaftende so angeordnet ist, dass ein frei abstehender Verriegelungsrandbereich der Stirnseitenplatte auf einer der Schenkelverbindungsseite gegenüberliegenden Verriegelungsseite mit jedem der beiden Klemmschenkel in einen Verriegelungsschlitz in dem frei abstehenden Klemmschenkelende des betreffenden Klemmschenkels eingreift. Zweckmäßigerweise bedeckt und überragt oder umgreift die Stirnseitenplatte die Stirnseite des Gewindeschaftendes. Die Stirnseitenplatte kann dabei bei einer bestimmungsgemäßen Festlegung der Vorrichtung an dem Gewindeschaftende zumindest bereichsweise an der Stirnseite des Gewindeschaftendes anliegen und dadurch eine zusätzliche Festlegung und Sicherung der Vorrichtung begünstigen. An der Stirnseitenplatte kann die Befestigungseinrichtung angeordnet oder ausgebildet sein.

Der Verriegelungsrandbereich greift in die Klemmschenkel ein und verhindert ein unbeabsichtigtes Verformen sowohl der Stirnseitenplatte als auch der Klemmschenkel während der bestimmungsgemäßen Verwendung der Vorrichtung. Der Verriegelungsrandbereich kann derart ausgebildet sein, dass die Verriegelungsschlitze der Klemmschenkel in einer vorgebbaren Position relativ zu der Stirnseitenplatte klemmend, rastend oder formschlüssig an dem Verriegelungsrandbereich der Stirnseitenplatte fixiert oder zurückgehalten werden. Eine unerwünschte Verformung der Klemmschenkel und insbesondere eine unerwünschte Aufweitung der Klemmschenkel und eine dadurch reduzierte Klemmwirkung oder eine dadurch begünstigte oder ermöglichte Ablösung des Eingriffselements von dem formschlüssigen Eingriff in den Gewindegang kann dadurch weitgehend verhindert werden. Auf diese Weise können ein unerwünschtes axiales Verschieben oder ein vollständiges Ablösen der Vorrichtung von dem Gewindeschaftende zusätzlich erschwert oder vollständig verhindert werden.

In vorteilhafter Weise kann vorgesehen sein, dass sich die beiden Verriegelungsschlitze in den beiden Klemmschenkeln quer zu einer axialen Richtung des Gewindeschaftendes erstrecken. Durch die quer zu der axialen Richtung ausgerichteten Verriegelungsschlitze wird eine entsprechende Ausrichtung des Verriegelungsrandbereichs der Stirnseitenplatte vorgegeben und durch den formschlüssigen Eingriff des derart ausgerichteten Verriegelungsrandbereichs der Stirnseitenplatte mit den Verriegelungsschlitzen in den Klemmschenkels ein unbeabsichtigtes und unerwünschten Verkippen und Aufklappen der Stirnseitenplatte verhindert. Weiterhin kann optional vorgesehen sein, dass ein Endbereich des jeweiligen Verriegelungsschlitzes einen geringeren Abstand zu dem Kopfbereich der Vorrichtung als ein offener Einführbereich des Verriegelungsschlitzes. Falls eine von außen auf die Stirnseitenplatte ausgeübte Zug- oder Druckkraft eine in der axialen Richtung über die Stirnseite hinweg nach außen gerichteten Verkippung oder Verformung bewirken würde, wird dadurch der Verriegelungsrandbereich der Stirnseitenplatte tiefer in die Verriegelungsschlitze eingeführt und eingedrückt und ein unbeabsichtigtes Herausrutschen oder Abziehen des Verriegelungsrandbereichs der Stirnseitenplatte aus den Verriegelungsschlitzen in den Klemmschenkeln zuverlässig verhindert.

Weiterhin kann einer vorteilhaften Ausgestaltung des Erfindungsgedankens zufolge vorgesehen sein, dass der Verriegelungsrandbereich der Stirnseitenplatte bei einer bestimmungsgemäßen Festlegung der Vorrichtung an dem Gewindeschaftende von einer von dem Gewindeschaftende abgewandten Seite in Richtung des Gewindeschaftendes in die Verriegelungsschlitze eingreift. Die Stirnseitenplatte umgreift mit dem seitlich über den Gewindeschaft hinausragenden, jedoch abgekanteten und in Richtung des Gewindeschafts zurückgerichteten Verriegelungsrandbereich jeweils einen abstehenden Klemmschenkelrand. Dadurch wird eine Festigkeit und mechanische Belastbarkeit der bestimmungsgemäß an dem Gewindeschaftende festgelegten Vorrichtung zusätzlich erhöht und verbessert.

Es wird als besonders vorteilhaft erachtet, dass optional die beiden Klemmschenkel jeweils zwischen einem frei abstehenden Klemmschenkelrand und einem Klemmschenkelanlagebereich, in welchem der betreffende Klemmschenkel bei einer bestimmungsgemäßen Festlegung der Vorrichtung klemmend an dem Gewindeschaftende anliegt, jeweils einen radial von dem Gewindeschaftende nach außen und von dem gegenüberliegend angeordneten Klemmschenkel weg gerichteten Betätigungs- und Einführungsabschnitt aufweisen, zwischen denen das Gewindeschaftende seitlich zwischen die beiden Klemmschenkelanlagebereiche einführbar ist und mit welchen die beiden Klemmschenkel aufspreizbar sind. Die Betätigungs- und Einführungsabschnitte ermöglichen eine einfache Handhabung der Vorrichtung während der Festlegung an dem Gewindeschaftende, insbesondere auch das Aufspreizen der Klemmschenkel entgegen einer hohen Klemmkraft, um die Vorrichtung mit geringem Aufwand auf das Gewindeschaftende aufschieben oder aufsetzen zu können. Dies erleichtert die Montage erheblich und macht den Einsatz von Werkzeugen überflüssig. Die beiden Betätigungs- und Einführungsabschnitte der Klemmschenkel sind zweckmäßigerweise V-förmig angeordnet, sodass ein Abstand zwischen den beiden Betätigungs- und Einführungsabschnitten in Richtung des jeweiligen Klemmschenkelrands kontinuierlich zunimmt. Zweckmäßigerweise ist ein Abstand zwischen den beiden Betätigungs- und Einführungsabschnitten der Klemmschenkel zwischen den beiden Klemmschenkelrändern größer als ein Durchmesser des Gewindeschaftendes, an welchem die Vorrichtung bestimmungsgemäß festgelegt werden soll. Die beiden Klemmschenkel können dann mit dem sich in der axialen Richtung erstreckenden und zwischen den beiden Klemmschenkeln gebildeten Einführungsschlitz seitlich bzw. in radialer Richtung an das Gewindeschaftende herangeführt und angedrückt werden, wobei das Gewindeschaftende dabei zwischen den Betätigungs- und Einführungsabschnitten selbsttätig zentriert wird, bis das Gewindeschaftende in der vorgesehenen Position zwischen den beiden Klemmschenkelanlagebereichen der Klemmschenkel angeordnet und dort fixiert ist.

Um bei einem möglichst geringen Raumbedarf eine möglichst vielseitige Verwendung der Vorrichtung mit verschiedenen Komponenten zu ermöglichen, die an dem Gewindeschaftende befestigt werden sollen, kann optional vorgesehen sein, dass die Befestigungseinrichtung eine in einer axialen Richtung an der Stirnseite vorspringende Öse aufweist, durch welche hindurch ein Kabelbinder führbar und daran festlegbar ist. Die an der Stirnseite vorspringende Öse kann in einfacher und kostengünstiger Weise durch das Einbringen von zwei parallelen Schlitzen in die Stirnseitenplatte und ein anschließendes Verformen und Auswölben des zwischen den zwei parallelen Schlitzen verbleibenden Stegabschnitts in der Stirnseitenplatte hergestellt werden.

Einer besonders vorteilhaften Ausgestaltung des Erfindungsgedankens zufolge ist vorgesehen, dass die Vorrichtung aus Metall hergestellt ist. Zweckmäßigerweise ist die Vorrichtung aus einem geeigneten Federstahl mit ausreichend elastischen Eigenschaften hergestellt, sodass bei einer Verformung und insbesondere bei einer radialen Aufweitung der Klemmschenkel eine dieser Verformung entgegenwirkende Federkraft erzeugt wird, durch welche bei der bestimmungsgemäßen Festlegung der Klemmschenkel an dem Gewindeschaftende die Klemmkraft und Klemmwirkung der Klemmschenkel an dem Gewindeschaftende bewirkt wird.

Im Hinblick auf eine möglichst kostengünstige Herstellung der Vorrichtung ist optional vorgesehen, dass die Vorrichtung ausgehend von einem ebenflächigen einstückigen Blechzuschnitt durch mehrfaches Umformen hergestellt ist. Durch die Verwendung eines einstückigen Blechzuschnitts kann ein ansonsten erforderlicher Fügeschritt oder Verbindungsschritt zum Zusammenfügen und Verbinden von zwei oder mehr zunächst getrennt voneinander hergestellten Komponenten der Vorrichtung vermieden werden. Das Umformen und insbesondere ein Abkanten von zwei Bereichen des zunächst ebenflächigen Blechzuschnitts kann sehr rasch und dennoch zuverlässig und kostengünstig durchgeführt werden. Das Austrennen des Blechzuschnitts aus einem ebenflächigen Metallblech kann beispielsweise durch Stanzen oder durch Laserschneiden ebenfalls zuverlässig und kostengünstig durchgeführt werden.

Nachfolgend werden Ausführungsbeispiele für erfindungsgemäß ausgestaltete Vorrichtungen näher erläutert, die in den Abbildungen dargestellt sind. Es zeigt:
Fig. 1 eine perspektivische Ansicht einer exemplarisch dargestellten ersten Variante einer Vorrichtung
Fig. 2 eine perspektivische Ansicht der in Fig. 1 dargestellten ersten Variante der Vorrichtung in einem bestimmungsgemäß an einem Gewindeschaftende einer Schraube festgelegten Zustand,
Fig. 3 bis 5 zwei verschiedene Seitenansichten und eine Unteransicht auf die erste Variante der Vorrichtung,
Fig. 6 bis 8 zwei verschiedene Seitenansichten und eine Draufsicht auf die erste Variante der Vorrichtung analog zu den in den Fig. 3 bis 5 gezeigten Ansichten, wobei die Vorrichtung an dem Gewindeschaftende der Schraube festgelegt ist,
Fig. 9 eine perspektivische Ansicht einer exemplarisch dargestellten zweiten Variante der Vorrichtung in einem bestimmungsgemäß an einem Gewindeschaftende einer Schraube festgelegten Zustand,
Fig 10 eine Seitenansicht der in Fig. 9 dargestellten zweiten Vorrichtung ohne das Gewindeschaftende, und
Fig. 11 eine Draufsicht auf einen Metallblechzuschnitt, aus welchem die in den Fig. 9 und 10 gezeigte zweite Variante der Vorrichtung durch mehrfaches Abkanten bzw. Umformen hergestellt werden kann.

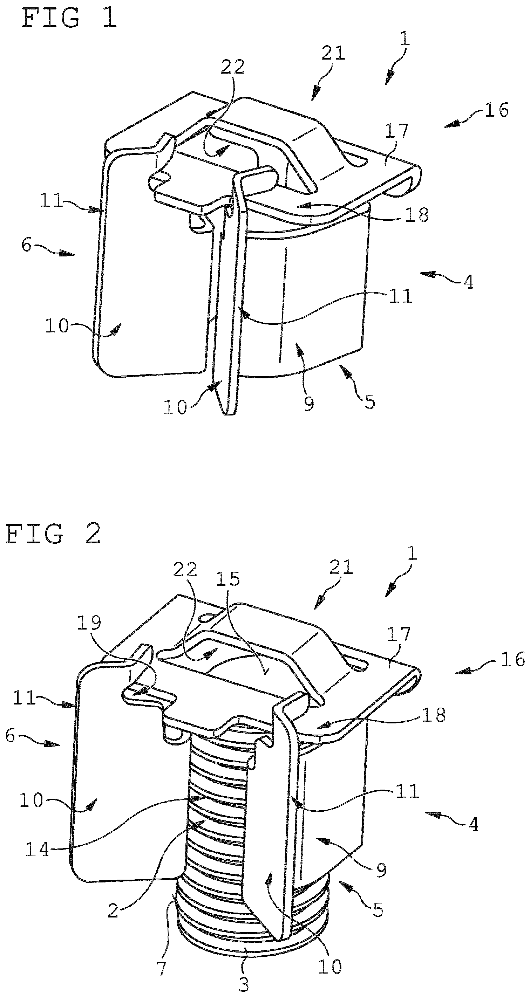

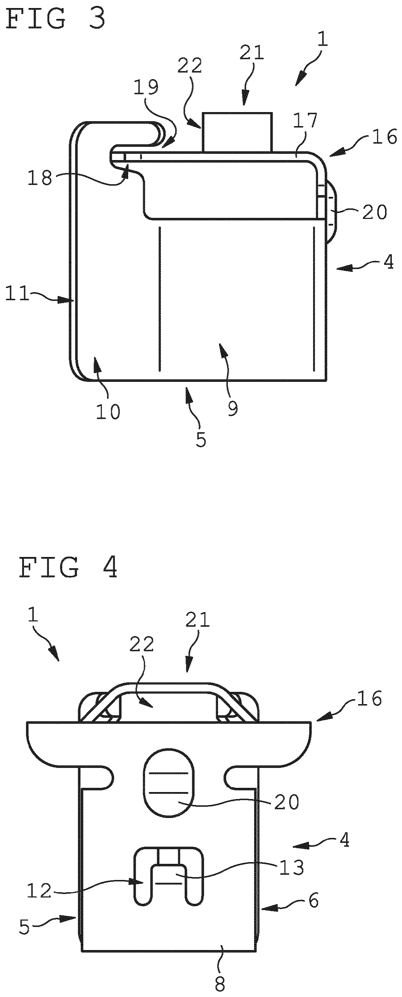

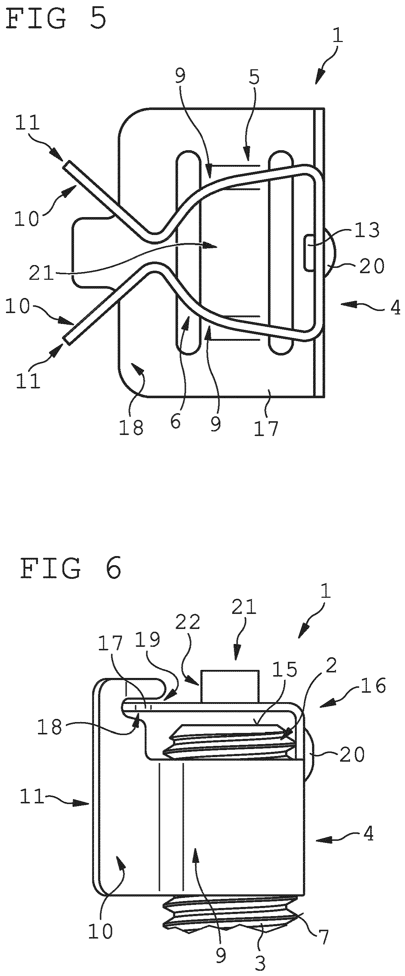

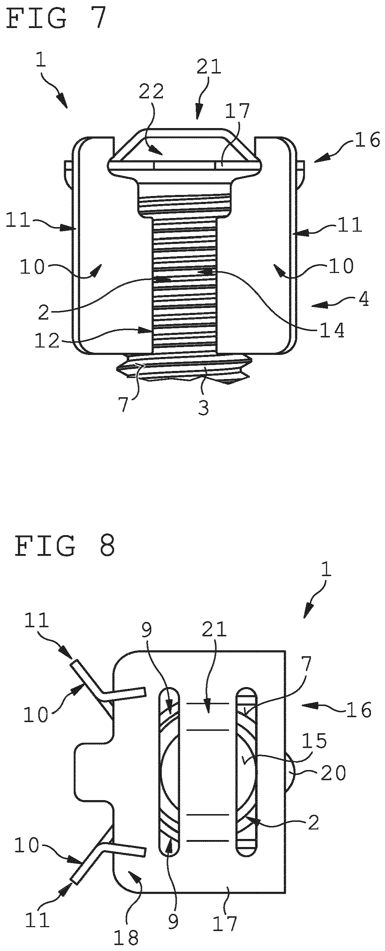

In den Fig. 1 bis 8 sind verschiedene Ansichten einer ersten Variante einer Vorrichtung 1 zur Festlegung einer nachfolgend noch näher erläuterten Befestigungseinrichtung an einem Gewindeschaftende 2 einer Gewindeschraube 3 dargestellt, wobei in den Fig. 1 sowie 3 bis 5 die Vorrichtung 1 ohne das Gewindeschaftende 2 und in den Fig. 2 sowie 6 bis 8 die Vorrichtung 1 mit dem Gewindeschaftende 2 gezeigt ist, an welchem die Vorrichtung 1 für eine bestimmungsgemäße Verwendung festgelegt ist.

Die Vorrichtung 1 umfasst einen Klemmbereich 4, in welchem zwei beabstandet zueinander angeordnete Klemmschenkel 5, 6 so ausgebildet und angeordnet sind, dass die Klemmschenkel 5, 6 bei der bestimmungsgemäßen Festlegung an dem Gewindeschaftende 2 eine Gewindemantelfläche 7 des Gewindeschaftendes 2 klemmend umgreifen. Die beiden Klemmschenkel 5, 6 sind über einen im Wesentlichen ebenflächig ausgebildeten Schenkelverbindungsabschnitt 8 miteinander verbunden. Die beiden Klemmschenkel 5, 6, die zusammen mit dem Schenkelverbindungsabschnitt 8 eine näherungsweise U-förmig ausgebildete Klemmvorrichtung bilden, weisen jeweils ausgehend von dem Schenkelverbindungsabschnitt 8 einen mindestens abschnittsweise gekrümmt verlaufenden Klemmschenkelanlagebereich 9 auf, der bei einer bestimmungsgemäßen Festlegung der Vorrichtung 1 an dem Gewindeschaftende 2 an der Gewindemantelfläche 7 anliegt und auf Grund der dabei erzwungenen Aufweitung der beiden Klemmschenkel 5, 6 an die Gewindemantelfläche 7 angepresst wird.

Im Anschluss an den Klemmschenkelanlagebereich 9 weist jeder Klemmschenkel 5, 6 einen von dem Gewindeschaftende 2 abstehend nach außen gerichteten Betätigungs- und Einführungsabschnitt 10 auf, der sich bis zu einem dem Schenkelverbindungsabschnitt 8 entgegengesetzten Klemmschenkelrand 11 erstreckt. Mit zunehmendem Abstand von dem Gewindeschaftende 2 nimmt ein Abstand zwischen den beiden Betätigungs- und Einführungsabschnitten 10 der beiden Klemmschenkel 5, 6 zu. Die beiden Klemmschenkel 5, 6 können während der Montage und Festlegung der Vorrichtung 1 an dem Gewindeschaftende 2 mit Hilfe der Betätigungs- und Einführungsabschnitte 10 auseinandergedrückt und auf das Gewindeschaftende 2 aufgeschoben werden. Die beiden in Richtung der Klemmschenkelanlagebereiche 9 aufeinander zulaufenden Betätigungs- und Einführungsabschnitte 10 bewirken dabei eine selbsttätige Zentrierung des Gewindeschaftendes 2, wenn die Klemmschenkel 5, 6 seitlich auf das Gewindeschaftende 2 aufgeschoben werden.

In dem Klemmbereich ist bei der ersten Variante in dem Schenkelverbindungsabschnitt 8 ein Eingriffselement 12 angeordnet. Das Eingriffselement 12 ist als gekrümmte Rasteingriffszunge 13 ausgebildet, wobei ein Endbereich der Rasteingriffszunge 13 zu dem Gewindeschaftende 2 hin ragt und in einen Gewindegang 14 des Gewindeschaftendes 2 eingreift. Auf diese Weise wird eine Fixierung der Vorrichtung 1 in einer axialen Richtung bzw. an einer durch die Montage vorgegebenen axialen Position an dem Gewindeschaftende 2 bewirkt. Durch die Formgebung und Ausrichtung der Rasteingriffszunge 13 wird ein Aufschieben der Vorrichtung 1 in einer axialen Richtung von einer Stirnseite 15 des Gewindeschaftendes 2 aus ermöglicht, indem die Rasteingriffszunge 13 entgegen einer Federwirkung verformt und nach außen gedrückt wird, während ein anschließendes Abziehen der Vorrichtung 1, nachdem die Rasteingriffszunge 13 in den Gewindegang 14 formschlüssig eingreift, nicht mehr ohne weiteres möglich ist, sodass die Vorrichtung 1 zuverlässig an dem Gewindeschaftende 2 axial fixiert und festgelegt ist.

In einem Kopfbereich 16 der Vorrichtung 1 ist eine Stirnseitenplatte 17 ausgebildet, die quer zu der axialen Richtung des Gewindeschaftendes 2 angeordnet ist und sich von dem Schenkelverbindungsabschnitt 8, an welchem die Stirnseitenplatte 17 festgelegt ist, über die Stirnseite 16 hinweg bis zu einer dem Schenkelverbindungsabschnitt 8 gegenüberliegenden Bereich in der Nähe der jeweiligen Klemmschenkelränder 11 der beiden Klemmschenkel 5, 6 erstreckt. Die Stirnseitenplatte 17 weist einen Verriegelungsrandbereich 18 auf, der mit Verriegelungsschlitzen 19 in den Klemmschenkeln 5, 6 in Eingriff steht. Durch den formschlüssigen Eingriff der Stirnseitenplatte 17 mit den Klemmschenkeln 5, 6 kann in einfacher Weise zuverlässig verhindert werden, dass sich die Stirnseitenplatte 17 während einer langen Nutzungsdauer oder auf Grund von mechanischen Beanspruchungen allmählich aufbiegt oder aufgezogen wird. Zudem kann die Stirnseitenplatte 17 bei einer daran angepassten Ausgestaltung des Verriegelungsrandbereichs 18 dazu verwendet werden, die beiden Klemmschenkel 5, 6 vor oder während der Montage in einer gewünschten Ausgangslage und Montageposition zurückzuhalten, oder anschließend nach der erfolgreichen Montage und Festlegung an dem Gewindeschaftende 2 in einer vorgegebenen Festlegungsposition zu arretieren und ein unerwünschtes Aufweiten der Klemmschenkel 5, 6 auf Grund von mechanischen Belastungen zu verhindern.

In einem Übergangsbereich zwischen dem Schenkelverbindungsabschnitt 8 und der Stirnseitenplatte 17 ist eine Sicke 20 ausgebildet. Mit dieser Sicke 20 wird ebenfalls einer unbeabsichtigten Verformung und Verbiegung der Stirnseitenplatte 17 relativ zu dem Schenkelverbindungsabschnitt 8 entgegengewirkt.

An der Stirnseitenplatte 17 ist eine Befestigungseinrichtung 21 in Form einer Öse 22 ausgebildet. Diese Öse 22 dient zur Aufnahme eines Kabelbinders oder einer ähnlichen Befestigungseinrichtung und ist hinsichtlich der Abmessungen an die Aufnahme eines üblichen Kabelbinders angepasst.

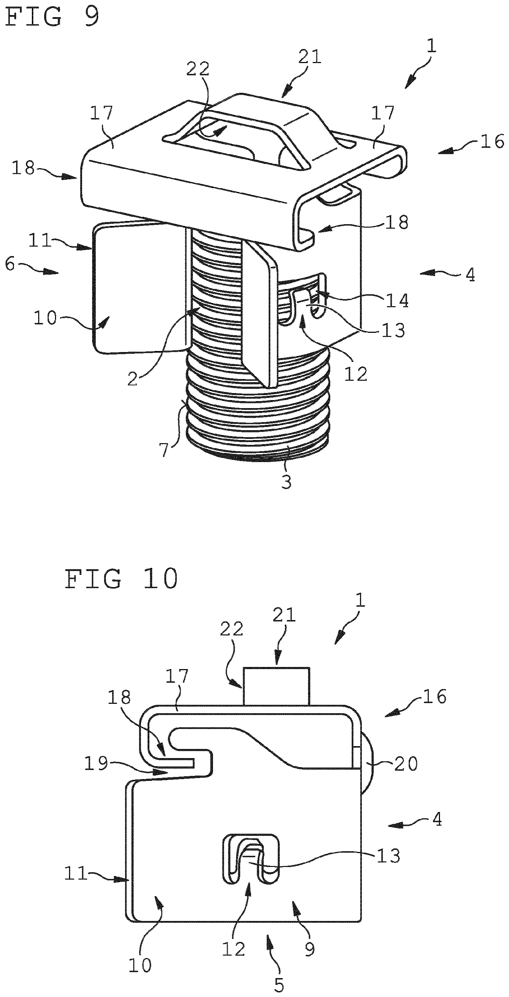

In den Fig. 9 und 10 ist beispielhaft eine zweite Variante der in den Fig. 1 bis 8 dargestellten Vorrichtung 1 abgebildet. Auch hier umfasst die Vorrichtung 1 den Klemmbereich 4 mit den beiden beabstandet zueinander angeordneten Klemmschenkeln 5, 6 sowie den Kopfbereich 16 mit der Stirnseitenplatte 17. Nachfolgend wird lediglich näher auf die abweichend zu der ersten Variante ausgestalteten Merkmale der Vorrichtung 1 eingegangen.

Bei der zweiten Variante der Vorrichtung 1 ist der Verriegelungsrandbereich 18 umgebogen und ragt nicht mehr von dem Gewindeschaftende 2 weg, sondern in Richtung des Gewindeschaftendes 2. Die Verriegelungsschlitze 19 sind daran angepasst und verlaufen von den Klemmschenkelrändern 11 ausgehend ebenfalls in Richtung des Gewindeschaftendes 2.

Bei der zweiten Variante der Vorrichtung 1 sind zusätzlich zu dem Eingriffselement 12 in dem Schenkelverbindungsabschnitt 8 in jedem Klemmschenkel 5, 6 jeweils ein weiteres Eingriffselement 12 angeordnet. Auf diese Weise wird die Vorrichtung 1 bei einer bestimmungsgemäßen Festlegung an dem Gewindeschaftende 2 mit insgesamt drei jeweils als Rasteingriffszunge 13 ausgebildeten Eingriffselementen 12 an dem Gewindeschaftende 2 fixiert.

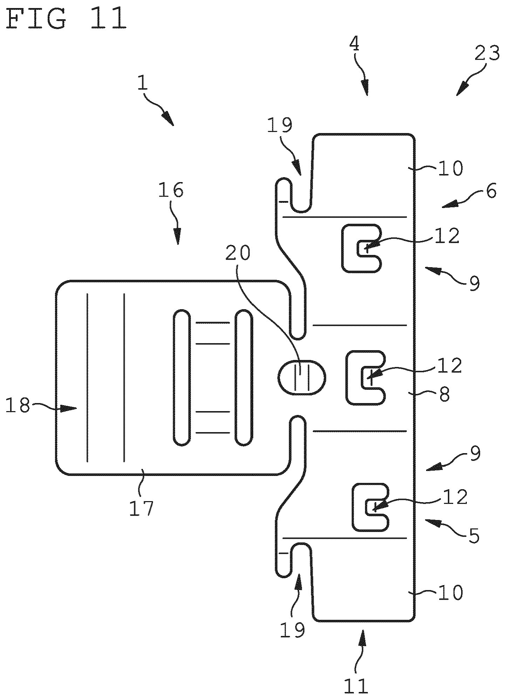

Die Vorrichtung 1 kann in beiden Fällen jeweils aus einem einstückigen Blechzuschnitt hergestellt werden, wobei durch mehrfaches Umformen des Blechzuschnitts die gewünschte Formgebung der Vorrichtung 1 vorgegeben wird. In Fig. 11 ist ein Blechzuschnitt 23 für die Herstellung der in den Fig. 9 und 10 gezeigten zweiten Variante der Vorrichtung 1 abgebildet. Die Öse 22 und die Sicke 20 werden in den zunächst ebenflächig ausgebildeten und aus einem Blech ausgestanzten Blechzuschnitt 23 eingedrückt. Anschließend werden einzelne Bereiche nacheinander umgeformt und abgekantet, um aus dem Blechzuschnitt 23 die Vorrichtung 1 herzustellen. Dieses Herstellungsverfahren lässt sich zuverlässig und kostengünstig durchführen. Mit der Vorrichtung 1 wird eine stabile Befestigungslösung für Kabelbinder an Gewindeschaftenden 2 bereitgestellt, die sich besonders für Anwendungen eignet, die eine hohe mechanische Stabilität und Belastbarkeit erfordern.

## Patentansprüche

1. Vorrichtung (1) zum Festlegen einer Befestigungseinrichtung (21) an einem Gewindeschaftende (2) einer Gewindeschraube (3) oder dergleichen, wobei die Vorrichtung einen Klemmbereich (4) mit zwei beabstandet zueinander angeordneten Klemmschenkeln (5, 6) aufweist, mit welchen eine Gewindemantelfläche (7) des Gewindeschaftendes (2) klemmend umgreifbar ist, und wobei die Vorrichtung (1) einen Kopfbereich (16) mit der Befestigungseinrichtung (21) aufweist, die bei einer bestimmungsgemäßen Festlegung der Vorrichtung (1) an dem Gewindeschaftende (2) an einer Stirnseite (15) des Gewindeschaftendes (2) angeordnet ist.

2. Vorrichtung (1) nach Anspruch 1, **dadurch gekennzeichnet, dass** in dem Klemmbereich (4) mindestens ein Eingriffselement (12) angeordnet oder ausgebildet ist, welches bei einer bestimmungsgemäßen Festlegung der Vorrichtung (1) an dem Gewindeschaftende (2) in einen Gewindegang (14) an dem Gewindeschaftende (2) eingreift und dadurch die Vorrichtung (1) in einer axialen Richtung an dem Gewindeschaftende (2) fixiert.

3. Vorrichtung (1) nach Anspruch 2, **dadurch gekennzeichnet, dass** das Eingriffselement (12) eine Rasteingriffszunge (13) ist, die an einem Klemmschenkel (5, 6) abstehend angeordnet ist und mit einem freien Ende rastend in den Gewindegang (14) eingreifen kann.

4. Vorrichtung (1) nach Anspruch 2 oder Anspruch 3, **dadurch gekennzeichnet, dass** in jedem Klemmschenkel (5, 6) mindestens ein Eingriffselement (12) beabstandet von einem Klemmschenkelrand (11) in einem Klemmschenkelanlagebereich (9) angeordnet oder ausgebildet ist, in welchem der Klemmschenkel (5, 6) bei einer bestimmungsgemäßen Festlegung der Vorrichtung (1) klemmend an dem Gewindeschaftende (2) anliegt.

5. Vorrichtung (1) nach einem der Ansprüche 2 bis 4, **dadurch gekennzeichnet, dass** die beiden Klemmschenkel (5, 6) über einen Schenkelverbindungsabschnitt (8) miteinander verbunden sind, und dass in dem Schenkelverbindungsabschnitt (8) ein Eingriffselement (12) angeordnet oder ausgebildet ist.

6. Vorrichtung (1) nach einem der voranstehenden Ansprüche, **dadurch gekennzeichnet, dass** die Vorrichtung (1) in dem Kopfbereich (16) eine Stirnseitenplatte (17) aufweist, die auf einer Schenkelverbindungsseite mit dem beiden Klemmschenkeln (5, 6) verbunden ist und bei einer bestimmungsgemäßen Festlegung der Vorrichtung (1) an dem Gewindeschaftende (2) quer zu einer axialen Richtung des Gewindeschaftendes (2) an dem Gewindeschaftende (2) so angeordnet ist, dass ein frei abstehender Verriegelungsrandbereich (18) der Stirnseitenplatte (17) auf einer der Schenkelverbindungsseite gegenüberliegenden Verriegelungsseite mit jedem der beiden Klemmschenkel (5, 6) in einen Verriegelungsschlitz (19) in dem frei abstehenden Klemmschenkelende des betreffenden Klemmschenkels (5, 6) eingreift.

7. Vorrichtung (1) nach Anspruch 6, **dadurch gekennzeichnet, dass** sich die beiden Verriegelungsschlitze (19) in den beiden Klemmschenkeln (5, 6) quer zu einer axialen Richtung des Gewindeschaftendes (2) erstrecken.

8. Vorrichtung (1) nach Anspruch 6 oder Anspruch 7, **dadurch gekennzeichnet, dass** der Verriegelungsrandbereich (18) der Stirnseitenplatte (17) bei einer bestimmungsgemäßen Festlegung der Vorrichtung (1) an dem Gewindeschaftende (2) von einer von dem Gewindeschaftende (2) abgewandten Seite in Richtung des Gewindeschaftendes (2) in die Verriegelungsschlitze (19) eingreift.

9. Vorrichtung (1) nach einem der voranstehenden Ansprüche, **dadurch gekennzeichnet, dass** die beiden Klemmschenkel (5, 6) jeweils zwischen einem frei abstehenden Klemmschenkelrand (11) und einem Klemmschenkelanlagebereich (9), in welchem der betreffende Klemmschenkel (5, 6) bei einer bestimmungsgemäßen Festlegung der Vorrichtung (1) klemmend an dem Gewindeschaftende (2) anliegt, jeweils einen radial von dem Gewindeschaftende (2) nach außen und von dem gegenüberliegend angeordneten Klemmschenkel (6, 5) weg gerichteten Betätigungs- und Einführungsabschnitt (10) aufweisen, zwischen denen das Gewindeschaftende (2) seitlich zwischen die beiden Klemmschenkelanlagebereiche (9) einführbar ist und mit welchen die beiden Klemmschenkel (5, 6) relativ zueinander aufspreizbar sind.

10. Vorrichtung (1) nach einem der voranstehenden Ansprüche, **dadurch gekennzeichnet, dass** die Befestigungseinrichtung (21) eine in einer axialen Richtung an der Stirnseite (15) vorspringende Öse (22) aufweist, durch welche hindurch ein Kabelbinder führbar und daran festlegbar ist.

11. Vorrichtung (1) nach einem der voranstehenden Ansprüche, **dadurch gekennzeichnet, dass** die Vorrichtung (1) aus Metall hergestellt ist.

12. Vorrichtung (1) nach Anspruch 11, **dadurch gekennzeichnet, dass** die Vorrichtung (1) aus einem ausgehend von einem ebenflächigen einstückigen Blechzuschnitt (23) durch mehrfaches Umformen herstellbar ist.
